# NEW EUROPEAN PATENT SPECIFICATION

(11) **EP 2 525 088 B2**
(45) Date of publication and mention of the opposition decision: **20.04.2022**
(45) Mention of the grant of the patent: 21.10.2015
(21) Application number: 11166240.9
(22) Date of filing: 16.05.2011
(51) Int. Cl.: F03D 80/60, F03D 80/80, F24D 19/08

(54) **Air bleeding arrangement**
Entlüftungsanordnung
Arrangement de purge d'air

(43) Date of publication of application: 21.11.2012
(73) Proprietor: Siemens Gamesa Renewable Energy A/S, 7330 Brande (DK)
(72) Inventor: Pedersen, Niels Allan, 6740, Bramming (DK)
(74) Representative: Aspacher, Karl-Georg

(56) References cited:
- WO-A1-00/20794
- WO-A2-2008/131766
- WO-A2-2010/085961
- WO-A2-2010/085962
- WO-A2-2011/109846
- US-A1- 2011 095 539

## Description

The invention relates to an arrangement for bleeding air from a radiator of a cooling system.

Industrial machinery like motors or generators produces heat and has to be cooled. It is known to install a cooling system using a cooling medium for this purpose. The cooling medium is used to transport heat from the heat-source, e.g. the machinery, to a heat sink, e.g. a radiator. In the radiator the cooling medium is cooled by another medium like surrounding air passing through the radiator.

The cooling medium flows in a cooling circulation comprising pipes. Often air collects over time in the pipes, especially in the uppermost parts of the cooling system. In many cases the radiator is the highest part of the cooling system and air collects in the radiator.

Air is unwanted in the cooling system as it does not contribute to the cooling process. Furthermore the air occupies space in the radiator that is then not available for the cooling medium and the cooling process.

For this the air has to be removed from the cooling system. To remove the air the cooling system comprises a bleeding nipple to allow the air to exit the cooling system.

WO 2000 02794 A1 discloses an air relief pipe for use in connection with pipe installations in which a medium in fluid state is transported, primarily water. The air relief pipe has an inlet and an outlet for the fluid medium, said inlet and outlet each being connected to medium pipes in the pipe installation, and has an outlet for air or gases which have been contained in the fluid medium.

The innovative feature in the invention is that between the inlet and the outlet for the fluid medium, the air relief pipe has a flow area that is greater than the flow area for the inlet and the outlet for the fluid medium. There is hereby effected a reduction in the flow rate, so that it is easier for air bubbles to rise up in the air relief pipe and be collected in same.

WO 2011 109846 A2 describes a device for tube systems and/or energy supply systems containing liquid transport medium such as, for example, heating water, cooling water, base mixture and similar, said device enabling the entire pipe system to be purged at a central point, preferably, for use in horizontal pipes but also in vertical pipes and/or in pipes where the axis is in the spatial direction (e.g. purging the branches). This also enables, primarily, the maintenance and material costs to be reduced to a minimum as well as considerably improving installation thus saving time.

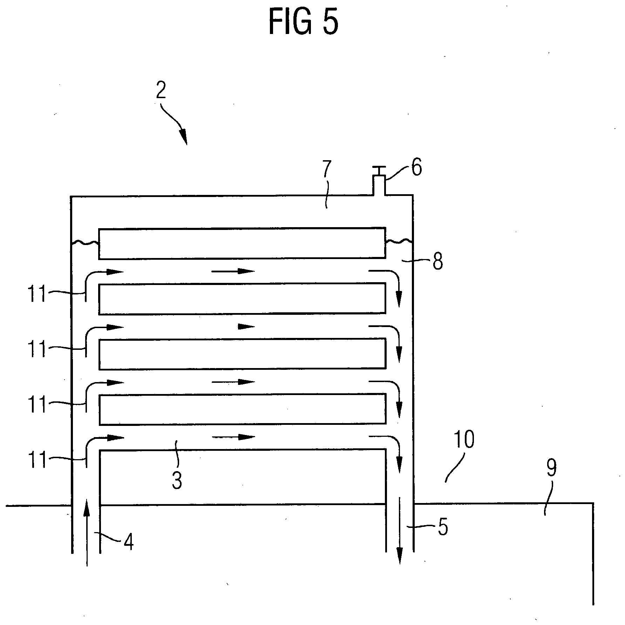

Fig 5 shows a radiator 2 in a prior art arrangement for bleeding air 7 that collects in the upper part of the radiator pipes 3.

The radiator 2 is part of a wind turbine cooling system and is connected to the nacelle 9 in free air 10.

The radiator 2 comprises an input pipe 4 that guides the cooling medium 8 into the cooling pipes 3. An output pipe 5 is connected to the cooling pipes 3 to allow the cooling medium 8 to flow out of the radiator 2. The arrows 11 show the flow of the cooling medium 8.

Over time air 7 collects in the upper part of the radiator 2. To remove the air 7 from the radiator 2 the upper part or the radiator is equipped with a bleeding nipple 6.

A worker has to open one or more of the bleeding nipples to remove the air from the system. This is done during the maintenance of the system. Often the bleeding nipple has to be opened repeatedly during the service to remove as much air as possible from the cooling system.

Especially in cases, where the radiator is placed in higher spots, like on roofs or on a wind turbine nacelle, this service involves a higher safety risk for the worker. The worker has to leave the nacelle of the wind turbine and work outside the nacelle. Special safety gear is needed for this service.

Sometimes the worker needs tools to operate a bleeding nipple. Thus there is the additional risk that tools might be dropped. In the case of a radiator on a wind turbine nacelle, these tools can fall to the ground and hurt people present close by the wind turbine.

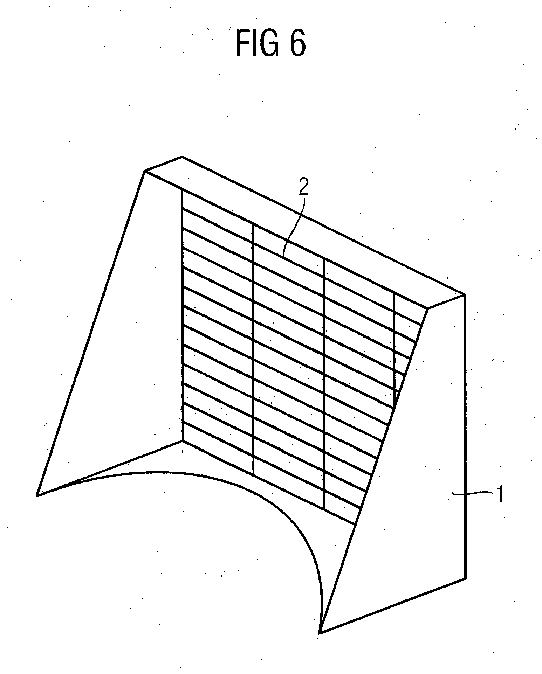

Figure 6 shows a radiator 2 of a cooling system of a wind turbine. This radiator 2 is normally placed outside the nacelle, mostly on top of the nacelle

The radiator 2 is connected to the nacelle by some supporting frame 1. The radiator 2 is arranged in a way that surrounding air 10 can pass through the radiator 2 to remove the heat from the radiator 2.

The aim of the invention is therefore to provide an arrangement that allows an easier and safer access to the bleeding nipple to remove air out of a cooling system.

This aim is reached be the features of claim 1. Preferred configurations of the invention are object of the dependent claims.

According to the invention the air bleeding arrangement for the cooling system comprises a cooling system, which contains a locally highest point, where air, being present in the cooling system, collects.

A bleeding nipple is connected with the locally highest point for the venting of the air collected. The bleeding nipple is connected with the locally highest point via an air bleeding duct, thus the air bleeding nipple is arranged remote from the locally highest point.

Thus the bleeding nipple can be arranged in another location then the locally highest point, especially in a location that can be easily reached. Thus service personal can easily reach the bleeding nipple without working in potentially dangerous environment such as on roofs.

Most preferably all bleeding nipples of the system can be installed close to each other at a specific location. Thus time is saved as the service personal doesn't have to change their position while the maintenance-work.

The cooling system comprises ducts, while the locally highest point is part of one of the ducts. Thus the bleeding nipple is connected via an air bleeding duct to the duct of the cooling system.

The cooling system is arranged to transport heat from a heat source to a heat sink using a cooling medium, which is circulating in ducts. Thus a cooling medium has a high heat capacity and therefore provides an efficient way of cooling.

The cooling system is part of a wind turbine. Thus the cooling system is transporting heat from different parts of the wind turbine, e.g. the generator or the nacelle, to a heat sink.

The locally highest point is located outside the nacelle of the wind turbine. Thus the cooling medium easily flows from the heat source in the wind turbine to the heat sink outside the nacelle.

A radiator, which is mounted on top of the nacelle, comprises the locally highest point of the cooling system. Thus the cooling medium can be cooled very effectively in a radiator. The radiator is mounted in the surrounding air on top of the nacelle of the wind turbine. Thus the wind is moving through the radiator for cooling purposes.

The air bleeding duct is arranged at an outer side of the input pipe or the output pipe of the radiator. Thus the free space for the air to move through the radiator is not restricted by the bleeding duct.

In an example not covered by the claims the radiator comprises at least two layers of cooling pipes. The air bleeding duct is arranged at least partially between two layers of cooling pipes. Thus the air bleeding duct is protected during installation of the radiator on top of the nacelle of the wind turbine.

In an example not covered by the claims the air bleeding duct is at least partially arranged within a duct, being used for the circulation of cooling medium within the radiator. Thus the bleeding duct is an integrated part of the radiator that is protected and does not block the open space of the radiator for the air moving through the radiator.

Preferably the bleeding nipple is arranged at a position, which is chosen in a way that operation of the nipple or maintenance of the cooling system by service personal is allowed. Thus the service personal can reach the bleeding nipple directly without the help of ladders or tools. Thus the use of bigger tools such as ladders can be prevented and time is saved in the maintenance.

Preferably the position is nearby or close to the nacelle, thus operation of the nipple or maintenance of the cooling system is allowed by service personal from inside the nacelle. Thus the service personal can reach the bleeding nipple through an opening or a hatch without leaving the nacelle. Thus service personal doesn't have to climb on top of the nacelle to operate the bleeding nipple. Thus the risk of accidents is reduced. Furthermore time for the maintenance is saved, as the steps of operating a bleeding nipple often have to be repeated.

Preferably the bleeding nipple is arranged inside the nacelle. Thus the service personal can reach the bleeding nipple without leaving the nacelle and without opening a hatch. Thus service personal can operate the bleeding nipple within the nacelle, so also tools that might be necessary to perform maintenance work can not fall from the nacelle down to the ground. Thus injuries are prevented.

The invention is shown in more detail by help of figures. The figures show preferred configurations and do not limit the scope of the invention.
- Fig. 1: shows a preferred embodiment of the solution invented,
- Fig. 2: shows a horizontal cut through the input pipe or the output pipe of the radiator and the air bleeding duct,
- Fig. 3: shows a horizontal cut through the input pipe or the output pipe of the radiator according to an example not covered by the claims,
- Fig. 4: shows an example not covered by the claims with the bleeding duct arranged in another duct,
- Fig. 5: shows a prior-art radiator of a wind turbine cooling system as described above in the introduction part,
- Fig. 6: shows a prior-art radiator arranged in a wind turbine cooling system as described above in the introduction part.

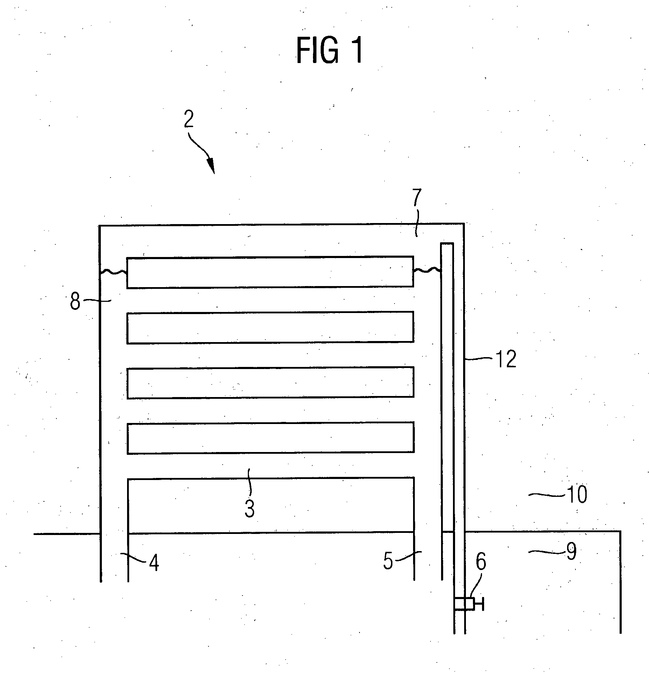

Fig. 1 shows a radiator 2 as used in a cooling system in a wind turbine. An input pipe 4 and an output pipe 5 are connected to the cooling pipes 3 so that the cooling medium 8 can flow from the input pipe 4 through the cooling pipes 3 to the output pipe 5.

Over time air 7 collects in the upper part of the radiator 2. To remove this air 7 an air bleeding duct 12 is connected to the upper part of the radiator that leads into the nacelle 9 of the wind turbine. The air bleeding duct 12 is equipped with a bleeding nipple 6. When the bleeding nipple 6 is opened the air 7 can be removed from the radiator 2.

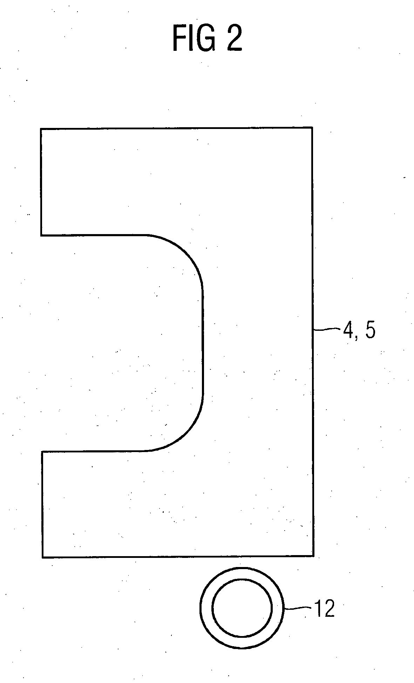

Fig. 2 shows a horizontal cut through the input pipe 4 or the output pipe 5 of the radiator 2 and the air bleeding duct 12. In this embodiment the radiator 2 has two layers of cooling pipes 3, a first layer seen from the direction of the wind passing through the radiator 2. A second layer is arranged behind the first layer seen from the direction of the wind passing through the radiator 2. Between the layers of cooling pipes 3 there is an open space. The input pipe 4 and the output pipe 5 connect the pipes 3 of both layers of cooling pipes 3. In the horizontal cut through the input pipe 4 or the output pipe 5 the input pipe 4 or the output pipe 5 show a U-shaped form. The first layer of cooling pipes 3 is connected to a first end of the U and the second layer of cooling pipes 3 to a second end of the U. The air bleeding duct 12 is arranged at the outer side of the U-shaped form of the input pipe 4 or the output pipe 5.

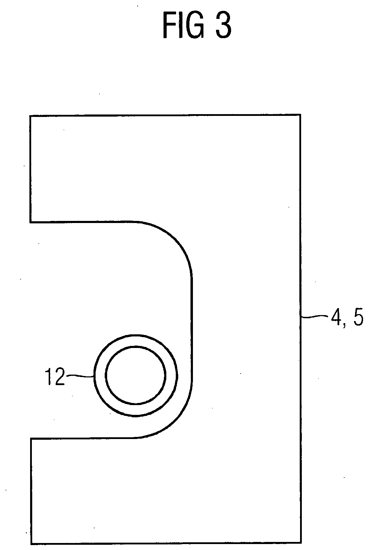

Fig. 3 shows a horizontal cut through an example of the input pipe 4 or the output pipe 5 of the radiator 2 not covered by the claims. The figure shows the input pipe 4 or the output pipe 5 as described in the description of FIG 2. The air bleeding duct 12 is arranged at the inner side of the U-shaped form of the input pipe 4 or the output pipe 5.

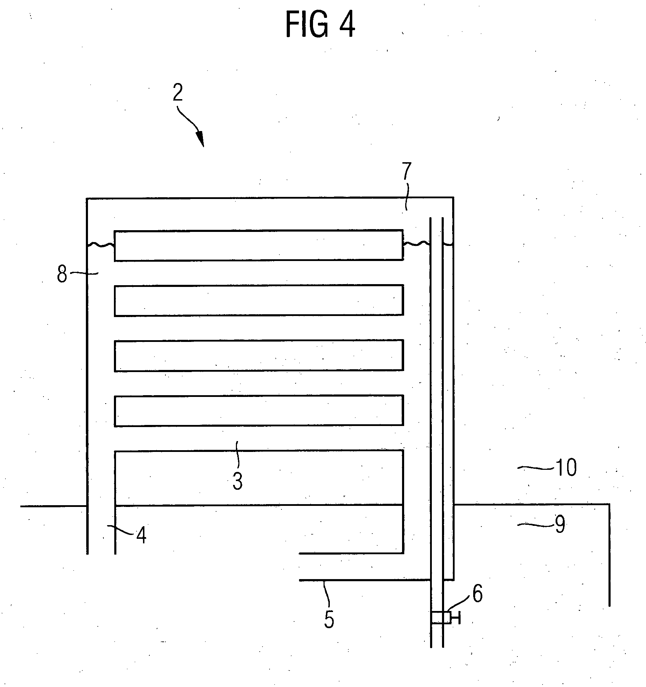

Fig. 4 shows an example not covered by the claims. It shows the radiator 2 with the cooling pipes 3, the input pipe 4 and the output pipe 5. The radiator 2 is mounted to the nacelle 9 in the surrounding free air 10. In this embodiment the air bleeding duct 12 is guided partially inside the output pipe 5. The air bleeding duct 12 comprises a bleeding nipple 6 which can be operated from inside the nacelle 9.

## Claims

1. Wind turbine cooling system comprising an air bleeding arrangement, wherein
- the cooling system comprises a locally highest point, where air (7), being present in the cooling system, collects,
- a bleeding nipple (6) is connected with the locally highest point for the venting of the air (7) collected,
- the locally highest point is located outside the nacelle (9) of the wind turbine,
**characterized in**
- **that** the bleeding nipple (6) is connected with the locally highest point via an air bleeding duct (12), thus the air bleeding nipple (6) is arranged remote from the locally highest point, thus service personnel can easily reach the bleeding nipple without working in a potentially dangerous environment,
wherein the cooling system comprises ducts (3, 4, 5), while the locally highest point is part of one of the ducts,
whereby the cooling system is arranged to transport heat from a heat source to a heat sink using a cooling medium (8),
which is circulating in ducts,
whereby a radiator (2), which is mounted on top of the nacelle (9), comprises the locally highest point of the cooling system,
whereby the air bleeding duct (12) is arranged at an outer side of the input pipe (4) or the output pipe (5) of the radiator (2).

2. Wind turbine cooling system according to claim 1, whereby the bleeding nipple (6) is arranged at a position, which is chosen in a way that operation of the nipple or maintenance of the cooling system by service personal is allowed.

3. Wind turbine cooling system according to claim 1 or claim 2, where the position of the bleeding nipple (6) is nearby or close to the nacelle (9), thus operation of the nipple or maintenance of the cooling system is allowed by service personal from the nacelle-inside.

4. Wind turbine cooling system according to claim 1 to claim 3, whereby the bleeding nipple (6) is arranged inside the nacelle (9).

## Patentansprüche

1. Windkraftanlagen-Kühlsystem, eine Entlüftungsanordnung umfassend, wobei:
- das Kühlsystem einen örtlich höchsten Punkt umfasst, an dem sich Luft (7) sammelt, die im Kühlsystem vorhanden ist,
- ein Entlüftungsnippel (6) mit dem örtlich höchsten Punkt verbunden ist, um die gesammelte Luft (7) zu entlüften,
- der örtlich höchste Punkt außerhalb der Gondel (9) der Windkraftanlage angeordnet ist,
**dadurch gekennzeichnet,**
- **dass** der Entlüftungsnippel (6) mit dem örtlich höchsten Punkt über einen Entlüftungskanal (12) verbunden ist, folglich der Entlüftungsnippel (6) fern des örtlich höchsten Punktes angeordnet ist und folglich das Wartungspersonal den Entlüftungsnippel leicht erreichen kann, ohne in einer potenziell gefährlichen Umgebung zu arbeiten,
wobei das Kühlsystem Kanäle (3, 4, 5) umfasst, wobei der örtlich höchste Punkt Teil eines der Kanäle ist,
wobei das Kühlsystem dafür angeordnet ist, unter Verwendung eines Kühlmediums (8), das in Kanälen zirkuliert, Wärme von einer Wärmequelle zu einem Kühlkörper zu transportieren,
wobei ein Radiator (2), der an die Oberseite der Gondel (9) montiert ist, den lokal höchsten Punkt des Kühlsystems umfasst,
wobei der Entlüftungskanal (12) an einer Außenseite der Eingangsleitung (4) oder der Ausgangsleitung (5) des Radiators (2) angeordnet ist.

2. Windkraftanlagen-Kühlsystem nach Anspruch 1, wobei der Entlüftungsnippel (6) an einer Position angeordnet ist, die derart ausgewählt ist, dass der Betrieb des Nippels oder die Wartung des Kühlsystems durch das Wartungspersonal möglich ist.

3. Windkraftanlagen-Kühlsystem nach Anspruch 1 oder Anspruch 2, wobei die Position des Entlüftungsnippels (6) nahe der Gondel (9) liegt, wodurch der Betrieb des Nippels oder die Wartung des Kühlsystems durch das Wartungspersonal aus dem Inneren der Gondel heraus möglich ist.

4. Windkraftanlagen-Kühlsystem nach Anspruch 1 bis Anspruch 3, wobei der Entlüftungsnippel (6) im Inneren der Gondel (9) angeordnet ist.

## Revendications

1. Système de refroidissement d'éolienne comprenant un agencement de purge d'air, dans lequel
- le système de refroidissement comprend un point localement le plus élevé, où l'air (7), étant présent dans le système de refroidissement, se collecte,
- un raccord de purge (6) est connecté avec le point localement le plus élevé pour la mise à l'air libre de l'air (7) collecté,
- le point localement le plus élevé est situé à l'extérieur de la nacelle (9) de l'éolienne,
**caractérisé**
- **en ce que** le raccord de purge (6) est connecté avec le point localement le plus élevé par l'intermédiaire d'une conduite de purge d'air (12), ainsi le raccord de purge d'air (6) est agencé à distance du point localement le plus élevé, ainsi le personnel d'entretien peut facilement atteindre le raccord de purge sans travailler dans un environnement potentiellement dangereux,
dans lequel le système de refroidissement comprend des conduites (3, 4, 5), tandis que le point localement le plus élevé fait partie d'une des conduites,
dans lequel le système de refroidissement est agencé de façon à transporter la chaleur d'une source de chaleur jusqu'à un puits de chaleur en utilisant un agent de refroidissement (8), qui circule dans des conduites,
dans lequel un radiateur (2), qui est monté au sommet de la nacelle (9), comprend le point localement le plus élevé du système de refroidissement,
dans lequel le radiateur (2) comprend au moins deux couches de tuyaux de refroidissement (3) et
dans lequel la conduite de purge d'air (12) est agencée au moins partiellement entre deux couches de tuyaux de refroidissement (3).

2. Système de refroidissement d'éolienne selon la revendication 1, dans lequel le raccord de purge (6) est agencé en une position qui est choisie de façon à ce que le fonctionnement du raccord ou la maintenance du système de refroidissement par le personnel d'entretien soit autorisé(e) .

3. Système de refroidissement d'éolienne selon la revendication 1 ou 2, dans lequel la position du raccord de purge (6) est proche ou à côté de la nacelle (9), ainsi le fonctionnement du raccord ou la maintenance du système de refroidissement est autorisé(e) par le personnel d'entretien de l'intérieur de la nacelle.

4. Système de refroidissement d'éolienne selon la revendication 1 à 3, dans lequel le raccord de purge (6) est agencé à l'intérieur de la nacelle (9).
